# EUROPÄISCHE PATENTANMELDUNG

(11) **EP 2 482 011 A2**
(43) Veröffentlichungstag der Anmeldung: **01.08.2012**
(21) Anmeldenummer: 12152849.1
(22) Anmeldetag: 27.01.2012
(51) Int. Cl.: F25B 41/06, F25B 49/02

(54) **Steuerung für eine Wärmepumpe**

(30) Priorität: 28.01.2011 DE 102011009621
(71) Anmelder: Parker Hannifin Manufacturing Germany GmbH & Co. KG, 33659 Bielefeld (DE)
(72) Erfinder: Durban, Frank, 77694 Kehl (DE)
(74) Vertreter: Müller, Karl-Ernst

(57) **Zusammenfassung**

Die Erfindung betrifft eine Steuerung (1) für eine Wärmepumpe mit einem Verdichter (20) und einem Expansionsventil (30), wobei die Steuerung (1) einen zum Anschluss an eine externe Versorgungsspannung ausgebildeten Drehzahlregler (2) für den Verdichter (20) sowie eine Ventilsteuerung 3) für das Expansionsventil (30) umfässt. Um Maßnahmen vorzuschlagen, die eine Steuerung einer Wärmepumpe bei geringerem apparativen Aufwand ermöglichen, ist vorgesehen, dass der Drehzahlregler (2) dazu ausgebildet ist, eine Versorgungsspannung für die Ventilsteuerung (3) bereitzustellen.

## Beschreibung

Die Erfindung trifft eine Steuerung für eine Wärmepumpe, einen Drehzahlregler sowie eine Wärmepumpe mit einer zugeordneten Steuerung.

Wärmepumpen kommen in verschiedenen Bereichen der Technik zum Einsatz. In jedem Fall wird hierbei Wärme unter Einsatz von Arbeit von einem kühleren Reservoir zu einem wärmeren Reservoir transportiert. Der technische Nutzen kann hierbei entweder in der Kühlung des kühleren Reservoirs (z.B. beim Kühlschrank) oder in der Heizung des wärmeren Reservoirs (z.B. bei der Nutzung von Erdwärme für Heizungen) liegen.

Beim typischen Aufbau einer Wärmepumpe durchläuft ein Arbeitsfluid oder Kältemittel einen Kreislauf, innerhalb dessen es an einem dem kühleren Reservoir zugeordneten Verdampfer verdampft und an einem dem wärmeren Reservoir zugeordneten Kondensator verflüssigt wird. Hierbei wird das Verflüssigen durch einen üblicherweise elektrisch betriebenen Verdichter herbeigeführt, während das Verdampfen durch ein Expansionsventil oder Drosselventil unterstützt wird. Bei älteren Typen von Wärmepumpen ist der Verdichter zumeist unmittelbar an eine Wechselspannung angeschlossen und arbeitet mit einem Asynchronmotor. Des Weiteren kommen hier thermostatische Expansionsventile zum Einsatz. Da zur Gewährleistung einer gewünschten Temperatur ein kontinuierlicher Betrieb der Wärmepumpe bei gleich bleibender Leistung in aller Regel ungeeignet ist, muss bei der dargestellten Bauform die Wärmepumpe zwischenzeitlich aus- und wieder eingeschaltet werden, was energetisch sehr ineffizient ist.

Aus diesem Grund arbeiten moderne Wärmepumpen mit einem drehzahlgeregelten Verdichter. Hierbei wird durch die Regelung der Drehzahl die Leistung der Wärmepumpe an den jeweiligen Bedarf angepasst. Zu diesem Zweck ist ein Drehzahlregler vorgesehen, an den der Verdichter angeschlossen ist und der seinerseits an ein Versorgungsnetz angeschlossen wird.

Des Weiteren werden zunehmend elektronisch gesteuerte Expansionsventile eingesetzt, mittels derer die Überhitzung des Arbeitsfluids gesteuert werden kann, was zur Effizienzsteigerung beiträgt. Diese Ventile können im Bedarfsfall auch vollständig geschlossen werden, um ein Eindringen von flüssigem Arbeitsfluid in den Verdichter, was diesen schwer beschädigen oder zerstören würde, zu verhindern. Typischerweise wird die Ventilposition, d,h. der Öffnungsgrad, durch einen Schrittmotor eingestellt.

Die Arbeitsweise eines solchen Expansionsventils wird über eine elektronische Ventilsteuerung geregelt, die typischerweise zum einen über einen Eingang für Sollwerte (z.B. Überhitzungstemperatur oder Ventilposition), zum anderen über einen oder mehrere Eingänge für Sensorwerte wie Verdampfertemperatur und Verdampferdruck verfügt. Üblicherweise wird eine solche Ventilsteuerung mit Gleichspannung oder Wechselspannung betrieben, die von einem Transformator geliefert wird, der an ein Versorgungsnetz angeschlossen ist. Dieses Versorgungsnetz ist in der Regel mit demjenigen identisch, an das der Drehzahlregler angeschlossen ist. Um beim Ausfall des Versorgungsnetzes zu verhindern, dass das Expansionsventil in einer Undefinierten Stellung stehen bleibt, was die Gefahr von Eindringen von flüssigem Arbeitsfluid in den Verdichter mit sich bringen würde, ist für diesen Fall eine Pufferbatterie notwendig, die wenigstens kurzzeitig eine Spannungsversorgung der Expansionsventilsteuerung gewährleistet und somit ein kontrolliertes Schließen des Expansionsventils ermöglicht. Der Verkabelungsaufwand sowie der Wartungsaufwand für die Pufferbatterie sind bei der dargestellten Anordnung relativ hoch. Dies bringt hohe Anschaffungs-und Wartungskosten mit sich, was z.B. bei Wärmepumpen für Hausheizungen die Amortisationsdauer gegenüber einer konventionellen Heizung verlängert.

Vor diesem Hintergrund ist es Aufgabe der vorliegenden Erfindung. Maßnahmen vorzuschlagen, die eine Steuerung einer Wärmepumpe bei geringerem apparativen Aufwand ermöglichen.

Diese Aufgabe wird erfindungsgemäß gelöst durch eine Steuerung für eine Wärmepumpe nach Anspruch 1, einen Drehzahlregler nach Anspruch 9 sowie durch eine Wärmepumpe nach Anspruch 10.

Die erfindungsgemäße Steuerung ist ausgelegt für eine Wärmepumpe, die einen Verdichter sowie ein elektronisches Expansionsventil aufweist. Die Steuerung umfasst hierbei einen Drehzahlregler für den Verdichter sowie eine Ventilsteuerung für das Expansionsventil, wobei der Drehzahlregler zum Anschluss an eine externe Versorgungsspannung ausgebildet ist. Als externe Versorgungsspannung kann hierbei eine einphasige Wechselspannung oder eine dreiphasige Wechselspannung vorgesehen sein. Im Rahmen der Erfindung ist jedoch auch der Anschluss an eine Gleichspannung denkbar.

Die Begriffe "Versorgungsspannung", "Spannungsversorgung" und "Spannungsanschluss" sind hier wie auch im Folgenden nicht dahingehend auszulegen, dass diese Spannung durch eine (nahezu) ideale Spannungsquelle geliefert werden muss, also dass die Spannung bzw. bei Wechselspannung deren Amplitude konstant ist.

Der Drehzahlregler ist in der Lage, einem Verdichter, bzw. dem Motor des Verdichters, eine bestimmte Drehzahl in Abhängigkeit von der Frequenz einer im Drehzahlregler erzeugten Wechselspannung vorzugeben. Der Drehzahlregler umfasst somit zumindest einen Wechselrichter zum Erzeugen der Wechselspannung sowie wenigstens einen Spannungsanschluss für den Verdichter. In solchen Fällen, in denen die externe Versorgungsspannung eine Wechselspannung bzw. Drehspannung ist, was bei den meisten Wärmepumpen der Fall ist, umfasst der Drehzahlregler zudem einen Gleichrichter, mit dessen Hilfe aus der externen Versorgungsspannung zunächst eine Gleichspannung generiert wird, die anschließend mittels des Wechselrichters in die Versorgungsspannung für den Verdichter wechselgerichtet wird. Der Drehzahlregler kann des Weiteren eine Schnittstelle für Sollwerte umfassen, durch die extern entweder die zu erzeugende Frequenz der Wechselspannung bzw. die Drehzahl für den Verdichter direkt vorgegeben wird oder aber für bestimmte Messwerte, wie z.B. Temperatur, aus denen der Drehzahlregler wiederum intern eine Drehzahl ermittelt.

Die Ventilsteuerung ist hierbei, wie bereits oben diskutiert, dazu ausgelegt, die Stellung des Expansionsventils vorgabegemäß einzustellen. Hierzu umfasst die Ventilsteuerung wenigstens einen Spannungsanschluss, über den z.B. ein Schrittmotor des Expansionsventils angesteuert werden kann.

Erfindungsgemäß ist der Drehzahlregler dazu ausgebildet, eine Versorgungsspannung für die Ventilsteuerung bereitzustellen. D.h. der Drehzahlregler verfügt über einen Anschluss für die Ventilsteuerung, an dem die Versorgungsspannung wenigstens dann bereitgestellt ist, wenn der Drehzahlregler seinerseits an die externe Versorgungsspannung angeschlossen ist. Der Drehzahlregler generiert demnach die Versorgungsspannung für die Ventilsteuerung mit Hilfe der externen Versorgungsspannung.

Hierunter fallen sowohl Bauformen, bei denen die Ventilsteuerung fest mit der Versorgungsspannung verbunden, z.B. verlötet, ist, als auch solche, bei denen der Drehzahlregler eine Buchse oder einen Stecker aufweist, die zum Anschluss an die Ventilsteuerung dienen und die eine für den Betrieb der Ventilsteuerung geeignete Spannung lifern, wenn der Wechselrichter an die externe Versorgungsspannung angeschlossen ist. Bevorzugt stellt der Drehzahlregler die Versorgungsspannung derart zur Verfügung, dass die Ventilsteuerung sowohl für die Funktion ihrer internen Komponenten als auch zum Ansteuern des Expansionsventils keine weitere Spannungsversorgung benötigt.

Durch die erfindungsgemäße Steuerung kann auf einen separaten Anschluss der Ventilsteuerung an ein Versorgungsnetz verzichtet werden. Auch ist ein separater Transformator für die Ventilsteuerung nicht notwendig, ebenso wenig wie eine Verkabelung desselben. Hierdurch lässt sich die gesamte Steuerung kompakter, einfacher und billiger gestalten. Da z.B. bei typischen Wärmepumpen für Erdwärmeheizungen der Drehzahlregler für einige kW Leistung ausgelegt ist, die Expansionsventilsteuerung allerdings nur in der Größenordnung von typischerweise ca. 10-100 W aufnimmt, kann die Versorgungsspannung normalerweise am Drehzahlregler bereitgestellt werden, ohne dass dieser für höhere Leistungen umkonzipiert werden muss.

Wenngleich im Rahmen der Erfindung z.B. denkbar ist, dass die Spannungsversorgung für die Ventilsteuerung über einen separaten Gleichrichter zur Verfügung gestellt wird, ist es bevorzugt, dass ein DC-Zwischenkreis des Drehzahlreglers zur Bereitstellung der Versorgungsspannung für die Ventilsteuerung ausgebildet ist. Hierbei bezeichnet "DC-Zwischenkreis" einen Stromkreis mit einer Gleichspannung, die durch Gleichrichten aus der externen Versorgungsspannung erzeugt wird, bevor sie durch einen Wechselrichter auf die gewünschte Frequenz wechselgerichtet wird. Der Begriff "Gleichspannung" bezeichnet in diesem Zusammenhang nicht ausschließlich zeitlich konstante Spannungen, sondern auch solche Spannungen, die der Überlagerung eines zeitlich konstanten Anteils mit einem zeitlich veränderlichen, z.B. oszillierenden Anteil, entsprechen.

Die dargestellte Ausführungsform der Erfindung ist besonders bevorzugt, da hierbei eine Gleichspannung benutzt wird, die der Drehzahlregler ohnehin bereits intern generiert. Oftmals liegt der Wert der vom Drehzahlregler intern generierten Gleichspannung (z. B. 600 V) höher als derjenige Wert, der von der Ventilsteuerung benötigt wird (z.B. 24 V). Um die notwendige Versorgungsspannung für die Ventilsteuerung zu erhalten, kann die im DC-Zwischenkreis vorhandene Spannung mittels eines Spannungsteilers oder anderer Bauelemente, die dem Fachmann geläufig sind, reduziert werden.

In Abhängigkeit von dem Motortyp, der für den Verdichter der Wärmepumpe genutzt wird, kann der Drehzahlregler von unterschiedlicher Bauart sein. Insbesondere kann er als AC- oder BLDC-Drehzahlregler ausgebildet sein. Diese Typen entsprechen den geläufigen Typen von Motoren in Verdichtern, nämlich Wechselstrom- bzw. bürstenlosen Gleichstrommotoren beziehungsweise Permanentmagnetmotoren.

Bevorzugt weist die Steuerung ein an eine Versorgungsspannung des Drehzahlreglers angeschlossenes, vorzugsweise an den DC-Zwischenkreis angeschlossenes, Pufferelement auf. Dieses Pufferelement ist dazu ausgebildet, bei einem Absinken der externen Versorgungsspannung ein Absinken der Versorgungsspannung für die Ventilsteuerung zu verzögern. "Verzögern" bedeutet in diesem Zusammenhang, dass das Absinken später und/oder langsamer erfolgt. Als Pufferelement kann grundsätzlich, wie im Stand der Technik, eine Batterie genutzt werden. Um allerdings die hiermit verbundenen Wartungsprobleme zu beseitigen, umfasst das Pufferelement bevorzugt eine Kapazität, z. B. einen Kondensator. Dieser kann als separates Bauteil vorliegen oder in den Drehzahlregler oder die Ventilsteuerung integriert sein. Besonders bevorzugt wird hierbei eine Kapazität genutzt, die der Drehzahlregler ohnehin schon als Teil eines Gleichrichters aufweist. Wird die Versorgungsspannung für die Ventilsteuerung über den DC-Zwischenkreis des Drehzahlreglers gespeist, so liegt hier in aller Regel bereits eine mittels wenigstens einer Kapazität stabilisierte Spannung vor, d.h. sogar ein völliger Ausfall der externen Versorgungsspannung bewirkt keinen sofortigen Ausfall der Versorgungsspannung für die Ventilsteuerung.

Bevorzugt umfasst die Steuerung eine Notfallschaltung, die dazu ausgebildet ist, beim Absinken der externen Versorgungsspannung des Drehzahlreglers das Expansionsventil kontrolliert anzusteuern. Hierunter fällt jede Art von Schaltung, die ein Absinken der externen Versorgungsspannung, insbesondere einen Ausfall der externen Versorgungsspannung, registriert und das Expansionsventil so ansteuert, dass es sich danach in einem definierten Zustand befindet. Insbesondere kann dies derjenige Zustand sein, in dem das Expansionsventil geschlossen ist. Hierdurch kann verhindert werden, dass flüssiges Kältemittel bei einem Ausfall der Wärmepumpe durch das Expansionsventil strömt und so in den Verdichteter gelangt. Wenn als externe Versorgungsspannung eine Wechselspannung vorgesehen ist, bezieht sich das Absinken auf die Amplitude derselben. Üblicherweise ist es in diesem Zusammenhang vorgesehen, dass die Notfallschaltung den aktuellen Wert der externen Versorgungsspannung mit einem vorgegebenen Schwellwert vergleicht und bei Unterschreiten desselben das Expansionsventil wie geschildert ansteuert. Die Notfallschaltung ist bevorzugt in die Ventilsteuerung integriert, sie kann aber z.B. auch zumindest teilweise in den Drehzahlregler integriert sein.

Wie bereits dargelegt wurde, kann durch den erfindungsgemäßen Aufbau der Steuerung der apparative Aufwand, insbesondere der Verkabelungsaufwand, bereits deutlich reduziert werden. Besonders vorteilhaft ist es, wenn die Ventilsteuerung und der Drehzahlregler integriert ausgebildet sind. Typischerweise fällt unter einer solche integrierte Bauweise, dass der Drehzahlregler und die Ventilsteuerung in einem gemeinsamen Gehäuse untergebracht sind. Unabhängig davon, ob ein gemeinsames Gehäuse vorhanden ist, kann eine integrierte Bauweise insbesondere dadurch gegeben sein, dass wenigstens einzelne Komponenten des Verdichters und der Ventilsteuerung auf einem gemeinsamen Trägerkörper, insbesondere auf einer gemeinsamen Platine, untergebracht sind. Durch die integrierte Bauweise lässt sich eine besonders kompakte und robuste Steuerung bereitstellen, wobei eine separate, externe Verkabelung (z.B. für die Spannungsversorgung der Ventilsteuerung) zwischen dem Drehzahlregler und der Ventilsteuerung entfallen kann.

Bei einer integrierten Bauweise lässt sich der Verkabelungsaufwand weiter reduzieren, wenn die Steuerung wenigstens einen gemeinsamen Sollwerteingang für den Drehzahlregler und die Ventilsteuerung umfasst. Wie bereits eingangs erläutert, ist es in aller Regel notwendig, sowohl dem Drehzahlregler als auch der Ventilsteuerung einen oder mehrere Sollwerte vorzugeben. Während bei Bauformen, bei denen die genannten Komponenten getrennt sind, separate Sollwerteingänge notwendig sind, kann bei einer integrierten Bauweise im idealfall ein einzelner gemeinsamer Sollwerteingang genutzt werden, an denen z.B. ein einziges, gegebenenfalls mehradriges, Kabel angeschlossen werden kann.

Wie ebenfalls eingangs erläutert wurde. ist es sinnvoll und üblich, die Ventilsteuerung mit Sensorwerten (z.B. für Verdampfertemperatur und Verdampferdruck) zu versorgen. Aus diesem Grund umfasst auch bei einer integrierten Bauweise die Steuerung bevorzugt wenigstens einen Anschluss für einen Sensor. Dieser kann z.B. durch eine Anschlussbuchse an einem gemeinsamen Gehäuse bereitgestellt werden.

Durch die vorliegende Erfindung wird auch ein Drehzahlregler für die erfindungsgemäße Steuerung bereitgestellt. Wie bereits oben dargestellt, ist ein solcher Drehzahlregler zum Anschluss an eine externe Versorgungsspannung ausgelegt, sowie dazu, eine Versorgungsspannung für eine Ventilsteuerung bereitzustellen.

Die erfindungsgemäße Steuerung lässt sich vorteilhaft in einer Wärmepumpe einsetzen. Ein bevorzugtes Einsatzgebiet sind hierbei Wärmepumpen für Erdwärmeheizungen, aber auch Kühlvorrichtungen für Kühlhäuser, Klimaanlagen für Wohnräume etc.

Einzelheiten der Erfindung werden nachfolgend anhand eines Ausführungsbeispiels erläutert. Hierbei zeigt:
- Fig. 1:: eine schematische Darstellung von Komponenten einer Wärmepumpe mit einer Steuerung nach dem Stand der Technik: sowie
- Fig. 2:: eine schematische Darstellung von Komponenten einer Wärmepumpe mit einer Ausführungsform der erfindungsgemäßen Steuerung

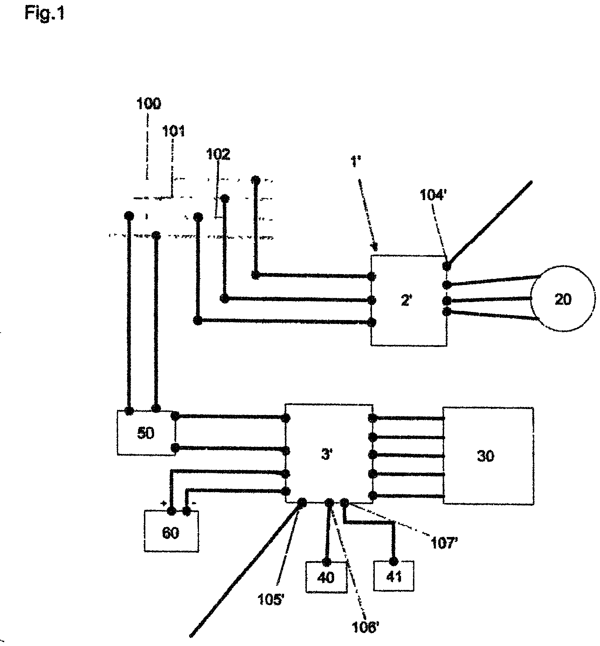

Fig. 1 zeigt verschiedene Komponenten einer Wärmepumpe nach dem Stand der Technik, die bei der Beheizung von Wohnhäusern mit Erdwärme eingesetzt wird. Die Wärmepumpe weist einen Verdichter 20 auf, mittels dessen das Kältemittel der Wärmepumpe am wärmeren Reservoir (dem Wohnhaus) verdichtet wird, wodurch diesem Wärme zugeführt wird. Um die Zahl der Verdichtungszyklen pro Zeitemheit und somit den Wärmetransport zum wärmeren Reservoir zu steuern, wird die Drehzahl des Verdichters 20 über einen Drehzahlregler 2' variabel eingestellt. Der Drehzahlregler ist seinerseits an die drei Phasen 100, 101, 102 eines Drehspannungsnetzes angeschlossen. Intern wird die Spannung des Versorgungsnetzes, die eine konstante Frequenz von 50 Hz hat, zunächst gleichgerichtet und anschließend auf eine vorgegebene Frequenz wechselgerichtet und an den Verdichter 20 angelegt. Die zu erzeugende Frequenz für den Wechselrichter wird dem Drehzahlregler 2' über einen ersten Sollwerteingang 104' von einer übergeordneten Steuerung (nicht dargestellt) vorgegeben.

Während die Verdichtung des Kältemittels über den Verdichter 20 kontrolliert wird, wird die Expansion desselben durch ein elektronisches Expansionsventil 30 kontrolliert, dessen Stellung über einen integrierten Schrittmotor gesteuert wird. Der Schrittmotor des Expansionsventils 30 wird über eine Ventilsteuerung 3' geregelt, an die das Expansionsventil 30 angeschlossen ist. Die Ventilsteuerung 3' ist zum einen mittels eines ersten Sensoranschlusses 106' an einen ersten Sensor 40 sowie mittels eines zweiten Sensoranschlusses 107' an einen zweiten Sensor 41 angeschlossen, zum anderen über einen zweiten Sollwerteingang 105' an die übergeordnete Steuerung. Im vorliegenden Fall misst der erste Sensor 40 den Verdampferdruck und der zweite Sensor 41 die Verdampfertemperatur. Aus den genannten Messwerten sowie dem über den zweiten Sollwerteingang 105' übermittelten Sollwert ermittelt die Ventilsteuerung 3' die geeignete Ventilstellung und steuert das Expansionsventil 30 entsprechend an. Die Ventilsteuerung 3' bildet zusammen mit dem Drehzahlregler 2' eine Steuerung 1' der Wärmepumpe.

Während der Drehzahlregler 2' aufgrund der hohen Leistungsaufnahme des Verdichters 20 von einigen kW direkt an ein Drehspannungsnetz angeschlossen ist, benötigt die Ventilsteuerung für interne Prozesse sowie zur Ansteuerung des Expansionsventils 30 lediglich eine Leistung von ca. 50 W. Sie ist daher an einen Transformator 50 angeschlossen, der seinerseits an lediglich eine Phase 102 des Drehspannungsnetzes angeschlossen ist. Dieser Transformator 50 transformiert die Netzspannung von 220 V auf 24 V herunter und speist sie in die Ventilsteuerung 3' oder alternativ in ein vorgeschaltetes Gleichspannungsnetzteil ein, wo sie gleichgerichtet wird. Um bei einem Ausfall des Versorgungsnetzes oder des Transformators 50 zu verhindern, dass das Expansionsventil 30 in einer zufälligen Stellung stehen bleibt, was zu einer Überflutung des Verdampfers mit flüssigem Kühlmittel führen könnte, ist die Ventilsteuerung 3' des Weiteren an eine Pufferbatterie 60 angeschlossen, die im Normalbetrieb der Ventilsteuerung 3' geladen wird und bei einem Ausfall der vom Transformator 50 gelieferten Spannung die weitere Funktion der Ventilsteuerung 3' sicherstellt. Ein Ausfall der vom Transformator 50 gelieferten Spannung wird in der Ventilsteuerung 3' registriert, die daraufhin das Expansionsventil 30 schließt.

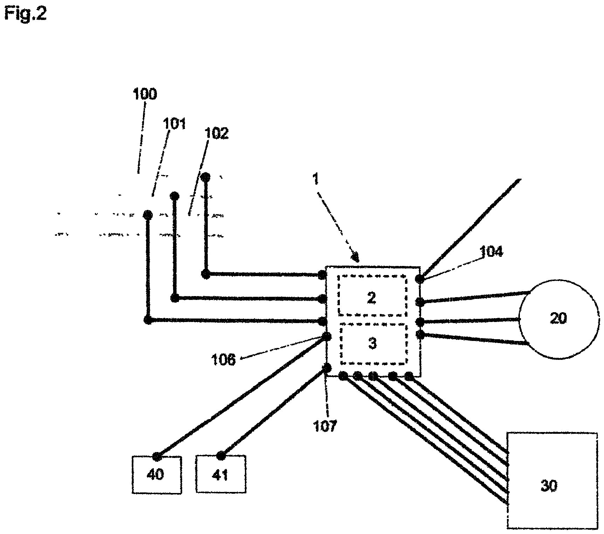

In Fig. 2 sind Komponenten einer Wärmepumpe mit einer erfindungsgemäßen Steuerung 1 dargestellt. Im vorliegenden Fall ist die Steuerung 1 voll integriert ausgebildet, wobei sich ein Drehzahlregler 2 und eine Ventilsteuerung 3 in einem gemeinsamen Gehäuse befinden. Zudem sind Komponenten des Drehzahlreglers 2 und der Ventilsteuerung 3 teilweise auf gemeinsamen Platinen angeordnet. Die Steuerung 1 ist wiederum an die drei Phasen 100, 101, 102 des Versorgungsnetzes angeschlossen, wodurch primär die Spannungsversorgung des Drehzahlreglers 2 gewährleistet wird, der seinerseits, wie im Stand der Technik bekannt, den Verdichter 20 ansteuert.

Allerdings wird über den im Drehzahlregler 2 vorhandenen DC-Zwischenkreis des Weiteren die Versorgungsspannung für die Ventilsteuerung 3 generiert. Da die im Zwischenkreis vorhandene Spannung als Versorgungsspannung für die Ventilsteuerung 3 zu hoch ist, wird sie mittels eines Spannungsteilers geeignet reduziert. Durch die dargestellte Anordnung entfällt ein separater Transformator 50 für die Ventilsteuerung 3 ebenso wie die für diesen notwendige Verkabelung. Darüber hinaus ist auch eine Pufferbatterie 60 unnötig, da im Gleichrichter des Drehzahlreglers relativ große Kapazitäten zum Einsatz kommen, aufgrund derer selbst bei einem plötzlichen Ausfall der Versorgungsnetzspannung die Spannung im DC-Zwischenkreis nicht sofort zusammenbricht, sondern innerhalb einiger Sekunden abklingt. Neben der Pufferbatterie 60 entfällt selbstverständlich auch deren Verkabelung. Die dargestellte Steuerung 1 ist durch den Wegfall der Pufferbatterie 60 wesentlich wartungsärmer, außerdem entfällt die Entsorgung der Batterie nach deren begrenzter Lebensdauer und die hiermit verbundene Neuanschaffung.

In die Ventilsteuerung 3 ist eine Notfallschaltung integriert, die ständig die Netzspannung mit einem Schwellwert vergleicht. Registriert sie ein Absinken der Netzspannung unter den Schwellwert, steuert sie das Expansionsventil 30 so an, dass es sich schließt. Aufgrund der Pufferwirkung der Kapazität im Gleichrichter des Drehzahlreglers 2 bleibt die Versorgungsspannung für die Ventilsteuerung 3 hinreichend lange über einem notwendigen Mindestwert, so dass das Schließen des Expansionsventils 30 zuverlässig durchgeführt werden kann.

Bei der gezeigten Steuerung 1 sind die Anschlüsse des Drehzahlreglers 2 für den Verdichter 20 sowie die Anschlüsse der Ventilsteuerung 3 für das Expansionsventil 30 außen am gemeinsamen Gehäuse der Steuerung 1 angeordnet. Das Gehäuse weist außerdem einen ersten Sensoranschluss 106 für den ersten Sensor 40 sowie einen zweiten Sensoranschluss 107 für den zweiten Sensor 41 auf. Hinzu kommt ein gemeinsamer Sollwerteingang 104, über den durch die übergeordnete Steuerung sowohl der oder die Sollwerte für den Drehzahlregler 2 als auch für die Ventilsteuerung 3 eingespeist werden. Da somit nur noch ein einzelner Sollwerteingang 104 notwendig ist, reduziert sich der Verkabelungsaufwand weiter.

Die dargestellte Steuerung 1 zeichnet sich durch einen kompakten und robusten Aufbau aus. Der Platzbedarf für die dargestellte Steuerung ist daher gering. Durch die höhere Integrationsdichte sowie durch die entfallenden Komponenten wie Transformator und Pufferbatterie sind die Anschaffungskosten geringer als bei dem in Fig. 1 gezeigten Aufbau. Schließlich entfallen die Probleme der Wartung und Entsorgung einer Pufferbatterie 60, was neben ökonomischen auch ökologische Vorteile mit sich bringt.

## Patentansprüche

1. Steuerung (1) für eine Wärmepumpe mit einem Verdichter (20) sowie einem elektronischen Expansionsventil (30), wobei die Steuerung (1)
- einen zum Anschluss an eine externe Versorgungsspannung ausgebildeten Drehzahlregler (2) für den Verdichter (20) sowie
- eine Ventilsteuerung (3) für das Expansionsventil (30)
umfasst,
**dadurch kennzeichnet, dass** der Drehzahlregler (2) dazu ausgebildet ist, eine Versorgungsspannung für die Ventilsteuerung (3) bereitzustellen.

2. Steuerung nach Anspruch 1, **dadurch gekennzeichnet, dass** ein DC-Zwischenkreis des Drehzahlreglers (2) zur Bereitstellung der Versorgungsspannung für die Ventilsteuerung (3) ausgebildet ist.

3. Steuerung nach Anspruch 1, **dadurch gekennzeichnet, dass** der Drehzahlregler (2) als AC-oder BLDC-Drehzahlregler ausgebildet ist.

4. Steuerung nach Anspruch 1, **gekennzeichnet durch** ein an eine Versorgungsspannung des Drehzahlreglers (2) angeschlossenes, vorzugsweise an den DC-Zwischenkreis angeschlossenes. Pufferelement, das dazu ausgebildet ist, bei einem Absinken der externen Versorgungsspannung ein Absinken der Versorgungsspannung für die Ventilsteuerung (3) zu verzögern.

5. Steuerung nach Anspruch 1, **gekennzeichnet durch** eine Notfallschaltung, die dazu ausgebildet ist, beim Absinken der Versorgungsspannung des Drehzahlreglers (2) das Expansionsventil (30) kontrolliert anzusteuern, insbesondere zu schließen.

6. Steuerung nach Anspruch 1, **dadurch gekennzeichnet, dass** die Ventilsteuerung (3) und der Drehzahlregler (2) integriert ausgebildet sind.

7. Steuerung nach Anspruch 6, **gekennzeichnet durch** wenigstens einen gemeinsamen Sollwerteingang (104) für den Drehzahlregler (2) und die Ventilsteuerung (3)

8. Steuerung nach Anspruch 6, **gekennzeichnet durch** wenigstens einen Anschluss (106. 107) für einen Sensor (40, 41).

9. Drehzahlregler (2) für eine Steuerung (1) nach einem der Ansprüche 1 bis 8

10. Wärmepumpe, umfassend eine Steuerung (1) nach wenigstens einem der Ansprüche 1 bis 8.
